# EUROPÄISCHE PATENTSCHRIFT

(11) **EP 1 037 737 B1**
(45) Veröffentlichungstag und Bekanntmachung des Hinweises auf die Patenterteilung: **12.03.2003**
(21) Anmeldenummer: 98958720.9
(22) Anmeldetag: 09.12.1998
(51) Int. Cl.: B29C 65/40, C09J 5/06

(54) **VERFAHREN ZUM VERKLEBEN VON GEGENSTÄNDEN AUS KUNSTSTOFF MITTELS EINES SCHMELZKLEBERS**
METHOD FOR GLUING PLASTIC OBJECTS WITH A HOT-MELT ADHESIVE
PROCEDE POUR COLLER DES OBJETS EN PLASTIQUE A L'AIDE D'UNE COLLE A FUSION

(30) Priorität: 09.12.1997 AT 208197
(43) Veröffentlichungstag der Anmeldung: 27.09.2000
(73) Patentinhaber: Henkel Kommanditgesellschaft auf Aktien, 40589 Düsseldorf (DE)
(72) Erfinder: SÜNDERMANN, Franz, A-3244 Ruprechtshofen (AT)
(86) Internationale Anmeldenummer: AT9800298
(87) Internationale Veröffentlichungsnummer: WO99029491

(56) Entgegenhaltungen:
- EP-A- 0 225 943
- EP-A- 0 288 821
- EP-A- 0 665 261
- WO-A-92/22419
- WO-A-94/16888
- DD-A- 242 779
- DE-A- 3 609 775
- DE-A- 3 906 278
- GB-A- 848 967
- US-A- 3 578 543
- US-A- 4 445 955
- US-A- 4 771 161
- US-A- 4 807 910
- PATENT ABSTRACTS OF JAPAN vol. 008, no. 090 (M-292), 25. April 1984 -& JP 59 007016 A (DAINICHI NIPPON DENSEN KK), 14. Januar 1984
- DATABASE WPI Section Ch, Week 9427 Derwent Publications Ltd., London, GB; Class A18, AN 94-221203 XP002098739 -& JP 06 155581 A (NOMA K), 3. Juni 1994
- DATABASE WPI Section Ch, Week 9006 Derwent Publications Ltd., London, GB; Class A35, AN 90-043348 XP002098740 -& SU 1 497 033 A (KIEV SHEVCHENKO UNIV) , 30. Juli 1989

## Beschreibung

Die Erfindung bezieht sich auf ein Verfahren zum Verkleben von Gegenständen aus Kunststoff mittels eines Schmelzklebers.

Zum Verbinden von Gegenständen aus den verschiedensten Materialien sind Schmelzkleber in Gebrauch, die in Form von Stangen, Pulvern oder Platten verwendet werden. Als Basis für diese Schmelzkleber dienen die verschiedensten Kunststoffe, z.B. Polyamid, Polypropilen usw.. Die Verklebung der Gegenstände erfolgt meist derart, daß wenigstens auf eine der zu verklebenden, Raumtemperatur aufweisenden Flächen der Schmelzkleber in erhitztem, also fließfähigem Zustand aufgebracht wird und dann die beiden zu verklebenden Flächen aneinander gepreßt werden. Nach kurzer Abkühlung sind die beiden Gegenstände fest miteinander verbunden.

Es ist auch schon bekannt, den Schmelzkleber vorerst auf einen Gegenstand aufzubringen, dann den Schmelzkleber über seine Schmelztemperatur zu erhitzen und die beiden Gegenstände zusammenzudrücken. Dies wurde z.B. bei der Verklebung von Bodenbelägen vorgeschlagen, wobei die Erhitzung des Schmelzklebers durch den Bodenbelag hindurch erfolgt. Der Bodenbelag selbst wurde aber dabei nicht über seine Schmelztemperatur erwärmt.

Nach einem anderen Vorschlag werden Installationsdosen mit dem Mauerwerk verklebt, wobei das Mauerwerk vorerst angewärmt und dann die Dosen durch Vermittlung eines Schmelzklebers angeklebt werden. Auch hier erfolgt keine Überschreitung der Schmelztemperatur des Mauerwerkes.

All diese Verfahren sind jedoch für manche Materialien nicht geeignet bzw. ist die erreichte Endfestigkeit nicht ausreichend.

Das Dokument EP 288821 A2 beschreibt eine Vorrichtung und ein Verfahren zum permanenten Verbinden Schneckengängen von Transportschnecken aus Kunststoff. Gemäß Anspruch 1 wird eine Vorrichtung zum Verbinden von mindestens 2 gegenüber liegenden Kanten von neben einander liegenden Modulen von Schneckengängen vorgeschlagen, wobei die Randbereiche in einer fixierten Position gehalten werden müssen und eine Vorrichtung enthalten, die den Zwischenraum abschließt, wobei nur eine Öffnung freigehalten wird, durch die bei hoher Temperatur (350 °F bis 500 °F, d.h. 190°C bis 290°C) und hohem Druck von etwa 4,2 bar (80 PSI) ein Kunststoffmaterial eingespritzt werden soll. Als konkrete Kunstmaterialien für die Module der Schneckengänge Polypropylen, Polyethylen und Polyurethan genannt, wobei das zu injizierende flüssige Kunststoffmaterial kompatibel zu den Kunststoffmodulen der Schneckengänge sein muß, für das zu injizierende Kunststoffmaterial werden Polyethylen, Polypropylen und Polyurethan genannt. Die Verwendung eines gegenüber Weichmachern resistenten Schmelzklebstoff zum Verkleben von Gegenständen aus Kunststoff wird in dieser Schrift nicht offenbart.

Das Dokument GB 848967 offenbart ein Verfahren zum Schweißen von Polyethylen, bei dem geschmolzenes Polyethylen mittels eines Extruders durch eine Düse auf Polyethylen Substrat - Oberflächen gefördert wird, die ohne Anwendungen von Druck verbunden werden sollen. In einer speziellen Ausführungsform soll die äußere Wand der Extrusionsdüse auf einer Temperatur oberhalb des Erweichungspunktes des zu verbinden Polyethylens gehalten werden und in Kontakt mit den zu verbinden den Polyethylen Substrat-Oberflächen gebracht werden. Dabei soll eine ausreichende Menge an geschmolzenem Polyethylen in den Verbindungsspalt eingebracht werden, um besagten Spalt auszufüllen und die zu verbindenden Oberflächen anzuschmelzen. Die Verwendung von Schmelzklebstoff zum Verbinden von Kunststoffteilen wird in dieser Schrift nicht offenbart.

Die Erfindung hat es sich zum Ziel gesetzt ein Verfahren zum Verkleben von Gegenständen mittels eines Schmelzklebers zu schaffen, das auch bei Materialien anwendbar ist, für die die Schmelzklebung bisher nicht eingesetzt werden konnte. Erreicht wird dies dadurch, daß zusätzlich zur oder bei der Erhitzung und Zugabe eines gegen Weichmacher resistenten Schmelzklebers wenigstens einer der zu verklebenden Gegenstände, insbesondere mehrschichtige Rohre, in seinem zu verklebenden Bereich über die Schmelztemperatur von Gegenstandsmaterialien erhitzt wird.

Wie durchgeführte Versuche gezeigt haben, vermischen sich bei Anwendung des erfindungsgemäßen Verfahrens die Komponenten der Materialien der zu verklebenden Gegenstände einerseits und des Schmelzklebers andererseits derart, daß eine innige und daher auch feste Verbindung entsteht. Auch eventuell vorhandene Weichmacher, die sonst die Verbindungsfähigkeit stören, üben bei Anwendung des erfindungsgemäßen Verfahrens keine nachteilige Wirkung aus. Selbst Materialien wie Polyäthylen (PE) können mittels des erfindungsgemäßen Verfahrens miteinander verbunden werden.

Im Rahmen der Erfindung ist es möglich, vorerst wenigstens einen der zu verklebenden Gegenstände in seinem zu verklebenden Bereich über die Schmelztemperatur von Gegenstandsmaterialien zu erhitzen und anschließend den Schmelzkleber einzubringen.

Bei einer Verbindung von Materalien mit so verschiedenen Schmelzpunkten, daß bei Erreichung des höheren Schmelzpunktes das Material mit dem niederen Schmelzpunkt zerstört werden könnte, kann vorerst der eine Gegenstand in seinem zu verklebenden Bereich über die Schmelztemperatur seines Materials erhitzt und mit dem einfließenden Schmelzkleber vermischt werden, worauf in einem zweiten Schritt der bereits abgekühlte und mit dem Material des einen Gegenstandes vermischte Schmelzkleber erhitzt und mit dem Material des zweiten Gegenstandes verbunden wird.

Die Durchführung des erfindungsgemäßen Verfahrens ist aber auch in der Weise möglich, daß der Schmelzkleber so hoch und so lange erhitzt wird, bis die zu verklebenden Materialien schmelzen und in den Schmelzkleber einfließen.

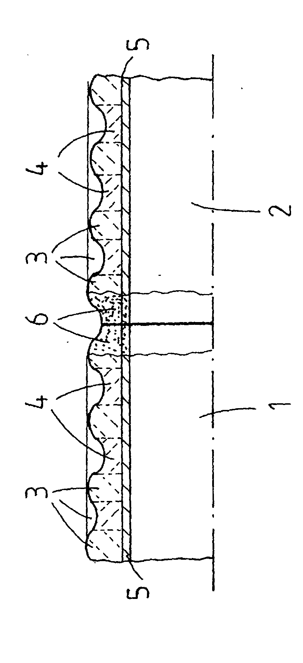

Nachstehend ist die Erfindung anhand eines in der Zeichnung dargestellten Ausführungsbeispieles näher beschrieben, ohne daß die Anwendung des erfindungsgemäßen Verfahrens auf dieses Ausführungsbeispiel beschränkt wäre. Dabei stellt die Zeichnung einen teilweisen Schnitt durch eine Verbindungsstelle zweier Rohre dar.

Gemäß der Zeichnung sind zwei Rohre 1 und 2 miteinander verbunden. Die Rohre 1 und 2 sind mehrschichtig aufgebaut und weisen zur mechanischen Verstärkung über ihre Länge schraubenförmig verlaufende Teile 3 aus Hart-PVC auf. Zwischen diesen "Schrauben" 3 aus Hart-PVC befinden sich Teile 4 aus Weich-PVC, die eine Verformung der Rohre 1 und 2 ermöglichen. Innen weisen die Rohre 1 und 2 ein Innenrohr 5 aus Polyurethan auf.

Die beiden Rohre 1 und 2 wurden in ihren Endbereichen 6 über die Schmelztemperatur zumindest der Materialien der Teile 3 und 4 erhitzt und ein Schmelzkleber eingebracht. Im Bereich 6 haben sich dadurch die geschmolzenen Materialien derart vermischt, daß eine innige Verbindung der Rohre 1 und 2 entstanden ist.

## Patentansprüche

1. Verfahren zum Verkleben von Gegenständen aus Kunststoff mittels eines Schmelzklebers, **dadurch gekennzeichnet, daß** zusätzlich zur oder bei der Erhitzung und Zugabe eines gegen Weichmacher resistenten Schmelzklebers wenigstens einer der zu verklebenden Gegenstände, insbesondere mehrschichtige Rohre, in seinem zu verklebenden Bereich über die Schmelztemperatur von Gegenstandsmaterialien erhitzt wird.

2. Verfahren nach Anspruch 1, **dadurch gekennzeichnet, daß** vorerst wenigstens einer der zu verklebenden Gegenstände in seinem zu verklebenden Bereich über die Schmelztemperatur von Gegenstandsmaterialien erhitzt und anschließend der Schmelzkleber eingebracht wird.

3. Verfahren nach Anspruch 2, **dadurch gekennzeichnet, daß** vorerst der eine Gegenstand in seinem zu verklebenden Bereich über die Schmelztemperatur seines Materials erhitzt und mit dem einfließenden Schmelzkleber vermischt wird, worauf in einem zweiten Schritt der bereits abgekühlte und mit dem Material des einen Gegenstandes vermischte Schmelzkleber erhitzt und mit dem Material des zweiten Gegenstandes verbunden wird.

4. Verfahren nach Anspruch 1 oder 3, **dadurch gekennzeichnet, daß** der Schmelzkleber so hoch und so lange erhitzt wird, bis die zu verklebenden Materalien schmelzen und in den Schmelzkleber einfließen.

## Claims

1. A method for bonding plastic objects together by means of a hot-melt adhesive, **characterised in that** in addition to or together with the heating and application of a plasticizer-resistant hot-melt adhesive, at least one of the objects to be bonded, especially multi-layered pipes, is heated up in the area to be bonded above the melting temperature of the materials of which the object is made.

2. A method according to claim 1, **characterised in that** at least one of the objects to be bonded is heated up first in the area to be bonded beyond the melting temperature of the material of which it is made and the hot-melt adhesive is introduced subsequently.

3. A method according to claim 2, **characterised in that** the one object is heated up first in the area to be bonded beyond the melting temperature of the material of which it is made and then mixed with the hot-melt adhesive flowing in, after which in a second phase the hot-melt adhesive that has already been cooled down after mixing with the material of the first object is reheated and bonded with the material of the second object.

4. A method according to claim 1 or 3, **characterised in that** the hot-melt adhesive is heated up to such a temperature and for such a long time that the materials to be bonded melt and flow into the hot- melt adhesive.

## Revendications

1. Procédé de collage d'objets en matière plastique à l'aide d'une colle à fusion, **caractérisé en ce que**, en plus de l'échauffement ou lors de celui-ci et de l'addition d'une colle à fusion résistant aux plastifiants, au moins un des objets à coller, en particulier des tubes multicouches, est échauffé dans sa zone à coller au-dessus de la température de fusion des matériaux des objets.

2. Procédé suivant la revendication 1, **caractérisé en ce qu'**on chauffe d'abord au moins un des objets à coller dans sa zone à coller au-dessus de la température de fusion des matériaux des objets et qu'on introduit ensuite la colle à fusion.

3. Procédé suivant la revendication 2, **caractérisé en ce qu'**on chauffe d'abord un des objets dans sa zone à coller au-dessus de la température de fusion de son matériau et qu'on le mélange avec la colle à fusion introduite, suite à quoi, dans une deuxième étape, la colle à fusion déjà refroidie et mélangée avec le matériau du premier objet est chauffée et liée au matériau du deuxième objet.

4. Procédé suivant la revendication 1 ou 3, **caractérisé en ce que** la colle à fusion est chauffée à une température suffisante pendant une durée suffisante pour provoquer la fusion des matériaux à assembler et leur mélange intime avec la colle à fusion.
